# EUROPÄISCHE PATENTSCHRIFT

(11) **EP 4 027 775 B1**
(45) Veröffentlichungstag und Bekanntmachung des Hinweises auf die Patenterteilung: **29.10.2025**
(21) Anmeldenummer: 20771807.3
(22) Anmeldetag: 09.09.2020
(51) Int. Cl.: A01K 1/01, A01K 1/015, A61L 2/18

(54) **STALLFUSSBODENBELAG, SYSTEM UND VERFAHREN ZUR REDUKTION MINDESTENS EINES GASES IN EINEM STALL**
BARN FLOOR COVERING, SYSTEM AND METHOD FOR REDUCING AT LEAST ONE GAS IN A BARN
REVÊTEMENT DE SOL D'ÉTABLE, SYSTÈME ET PROCÉDÉ DE RÉDUCTION D'AU MOINS UN GAZ DANS UNE ÉTABLE

(30) Priorität: 10.09.2019 DE 102019213719
(43) Veröffentlichungstag der Anmeldung: 20.07.2022
(73) Patentinhaber: Universität Rostock, 18055 Rostock (DE)
(72) Erfinder: BURGSTALER, Jörg, 18057 Rostock (DE); WIEDOW, Denny, 18069 Rostock (DE); KANSWOHL, Norbert, 18059 Rostock (DE)
(74) Vertreter: Altmann Stößel Dick Patentanwälte PartG mbB
(86) Internationale Anmeldenummer: PCT/EP2020/075230
(87) Internationale Veröffentlichungsnummer: WO 2021/048226

(56) Entgegenhaltungen:
- EP-A1- 3 162 196
- WO-A1-02/19809
- WO-A1-2016/071640
- WO-A1-2020/260522
- DE-A1- 10 257 286
- DE-U- 1 736 008
- FR-A1- 3 077 952

## Beschreibung

Die vorliegende Erfindung betrifft das Gebiet der Tierhaltung, insbesondere der Milchviehhaltung. Es wird ein Stallfußbodenbelag, ein System zur Reduktion mindestens eines Gases in einem Stall sowie ein Verfahren zur Reduktion mindestens eines Gases in einem Stall vorgeschlagen. Die vorgeschlagenen Vorrichtungen und das vorgeschlagene Verfahren sind insbesondere anwendbar in Ställen, insbesondere in Ställen zur Tierhaltung, insbesondere in Ställen zur Haltung von Milchvieh. Auch andere Anwendungen sind jedoch grundsätzlich denkbar.

Landwirte in Deutschland stellen sich mittelfristig auf deutlich verschärfte Regelungen zu Ammoniakemissionen ein. Das Bundeskabinett in Deutschland hat eine neue Verordnung über nationale Verpflichtungen zur Reduktion der Emissionen bestimmter Luftschadstoffe (43. BImSchV) beschlossen. Damit soll die EU-Richtlinie 2016/2284 (NERC-Richtlinie) in deutsches Recht umgesetzt werden. Die Bundesregierung in Deutschland erstellte hierfür ein nationales Luftreinhalteprogramm. Zur Einhaltung der Verpflichtungen zur Emissionsreduktion von mindestens 29 % ab dem Jahr 2030 gegenüber dem Jahr 2005 werden nach den Angaben der Bundesregierung Deutschland zusätzliche Maßnahmen im Bereich der Landwirtschaft und insbesondere der tierhaltenden Betriebe zur Reduktion von Ammoniakemissionen notwendig. Der Deutsche Bauernverband (DBV) geht von Struktureinschnitten für die Landwirtschaft aus (siehe Wiebke Herrmann, "agarheute", 22. Mai 2018: "Bundestag stimmt starker Reduzierung von Ammoniakemissionen zu"). Parallel dazu weist der Deutsche Bauernverband auf den Zielkonflikt zwischen Themen Emissionsschutz und Tierwohl hin. Zu den Tierwohlaspekten gehören beispielsweise Offenfrontklimaställe und Außenklimaställe.

EP3162196A1 offenbart Bodenelemente, bei denen die Abflussrillen benachbarter Bodenelemente in Längsrichtung ausgerichtet sind. Dadurch kann der Urin entlang der Rillen in ein Reservoir abfließen.

Die Aufgabe, die der vorliegenden Erfindung zugrunde liegt, besteht daher in der Bereitstellung von Vorrichtungen und Verfahren, die die zuvor genannten Anforderungen erfüllen. Insbesondere soll eine Ammoniakemission im bodennahen Bereich eines Stalls reduziert werden. Die Aufgabe wird durch die Ausführungsformen, die in den Ansprüchen und in der folgenden Beschreibung beschrieben werden, gelöst.

In einem ersten Aspekt der vorliegenden Erfindung wird ein Stallfußbodenbelag gemäß Anspruch 1 beschrieben. Der Stallfußbodenbelag umfasst mindestens eine Platte. Die Platte weißt mindestens eine erste Ablaufrinne auf. Der Stallfußbodenbelag umfasst weiterhin mindestens ein Abdeckelement. Das Abdeckelement ist auf die Platte auflegbar. Das Abdeckelement weist eine Vielzahl von zweiten Ablaufrinnen auf. Die zweiten Ablaufrinnen sind in einem Winkel von 30° bis 90° zu der ersten Ablaufrinne angeordnet. Weiterhin umfasst der Stallfußbodenbelag mindestens eine Leitung. Die Leitung weist eine Vielzahl von Öffnungen auf, welche für eine Flüssigkeit, umfassend mindestens einen Urease-Inhibitor, permeabel ausgebildet sind, wobei die Leitung auf der Platte angeordnet ist.

Der Begriff "Stall" bezeichnet grundsätzlich eine beliebige Unterbringung, insbesondere ein Gebäude, zur Unterbringung von Tieren, insbesondere von Haustieren, wie Rinder, Schweine, Pferde, Geflügel, Schafe und Ziegen. Der Begriff "Fußbodenbelag" bezeichnet grundsätzlich ein beliebiges Material oder eine Kombination von verschiedenen Materialien, welche eingerichtet sind, einen Boden eines Raums, eines Gebäudes ganz oder zumindest teilweise zu bedecken. Der Fußbodenbelag kann einstückig oder auch mehrstückig ausgebildet sein. Insbesondere kann der Fußbodenbelag aus mehreren Schichten aufgebaut sein. Der Fußbodenbelag kann daher auch als Schichtaufbau bezeichnet werden. Der Stallfußbodenbelag kann eine Dicke von 1 cm bis 20 cm, vorzugsweise von 2 cm bis 10 cm, vorzugsweise von 3 cm bis 5 cm und besonders bevorzugt von 4 cm aufweisen. Auch andere Dimensionen sind grundsätzlich denkbar.

Unter einer "Platte" ist allgemein im Rahmen der vorliegenden Erfindung ein beliebiges Element mit einer länglichen Form und einer Dicke zu verstehen, wobei die Ausdehnung des Elements in lateraler Dimension die Dicke des Elements überschreitet, beispielsweise um einen Faktor von 10 bis 1000, vorzugsweise um einen Faktor von 20 bis 50. Die Platte kann insbesondere aus mindestens einem Kompositmaterial und/oder aus mindestens einem Biopolymer hergestellt sein. Auch andere Materialien sind grundsätzlich denkbar. Die Platte kann eingerichtet sein, direkt auf dem Boden des Stalls aufzuliegen.

Der Stallfußbodenbelag kann insbesondere eine Vielzahl an Platten aufweisen. Die Vielzahl an Platten können nebeneinander angeordnet sein. Die Platten können eingerichtet sein, mittels eines Verriegelungssystems oder verschraubt oder miteinander verklebt verbunden zu werden. Dadurch kann insbesondere ein nahtlos ebener, dichter haltbarer Bodenbelag entstehen. Eine Montage der Leitung kann nach einer Montage der Platten auf dem Boden des Stalls erfolgen.

Die Platte kann mindestens eine Erhebung aufweisen. Das Abdeckelement kann mindestens eine Aussparung aufweisen. Das Abdeckelement kann derart auf der Platte auflegbar sein, dass die Erhebung in der Aussparung aufgenommen ist. Die Erhebung kann mindestens eine strukturierte Oberfläche aufweisen. Die strukturierte Oberfläche kann insbesondere eine Vielzahl an voneinander beabstandeten quaderförmigen Erhebungen aufweisen. Auch andere Ausgestaltungen sind grundsätzlich denkbar. Die Erhebung und die Platte können insbesondere einstückig ausgestaltet sein. Die Erhebung kann eingerichtet sein für einen natürlichen Abrieb von Klauen der Tiere, insbesondere der Milchkühe.

Der Begriff "Ablaufrinne" bezeichnet grundsätzlich eine beliebige linienförmige Vertiefung oder Mulde, welche eingerichtet ist für eine Abführung von Flüssigkeiten. Die Begriffe "erste Ablaufrinne" und "zweite Ablaufrinne" sind als reine Beschreibungen anzusehen, ohne eine Rangfolge oder Reihenfolge anzugeben und beispielsweise ohne die Möglichkeit auszuschließen, dass mehrere Arten von ersten Ablaufrinnen und/oder mehrere Arten von zweiten Ablaufrinnen oder jeweils genau eine Art vorgesehen sein kann. Weiterhin können zusätzliche Ablaufrinnen, beispielsweise eine oder mehrere dritte Ablaufrinnen vorhanden sein.

Wie bereits oben ausgeführt, weist die Platte die mindestens eine erste Ablaufrinne auf. Die erste Ablaufrinne kann insbesondere gerade ausgebildet sein. Auch andere Ausführungsformen sind grundsätzlich denkbar. Die erste Ablaufrinne kann ausgehend von der Erhebung insbesondere eine Tiefe von 1,0 cm bis 5,0 cm, vorzugsweise von 2,0 cm bis 4,0 cm und besonders bevorzugt von 3,0 cm bis 3,3 cm aufweisen.

Der Begriff "Abdeckelement" bezeichnet grundsätzlich ein beliebiges Element, welches eingerichtet ist, auf einem anderen Objekt aufzuliegen und andere Objekte ganz oder zumindest teilweise zu bedecken. Bei dem Abdeckelement kann es sich um ein Element mit einer länglichen Form und einer Dicke handeln, wobei die Ausdehnung des Elements in lateraler Dimension die Dicke des Elements überschreitet, beispielsweise um einen Faktor von 10 bis 1000, vorzugsweise um einen Faktor von 20 bis 50.

Insbesondere kann der Stallfußbodenbelag eine Vielzahl an Abdeckelementen aufweisen. Die Vielzahl an Abdeckelementen können zueinander beabstandet angeordnet sein. Insbesondere können die Abdeckelemente parallel zueinander angeordnet sein. Das Abdeckelement kann eine rechteckige Grundform aufweisen. Insbesondere kann das Abdeckelement im Wesentlichen streifenförmig ausgebildet sein. Auch andere Ausführungsformen sind jedoch grundsätzlich denkbar.

Das Abdeckelement kann beispielsweise aus mindestens einem Elastomer hergestellt sein. Dadurch kann ein Laufkomfort sowie eine Trittsicherheit der Tiere, insbesondere von Milchkühen, erhöht sein.

Wie bereits oben beschrieben, weist das Abdeckelement eine Vielzahl von zweiten Ablaufrinnen auf.

Das Abdeckelement kann eine erste Seite und eine gegenüberliegende zweite Seite aufweisen. Die Begriffe "erste Seite" und "zweite Seite" sind als reine Beschreibungen anzusehen, ohne eine Rangfolge oder Reihenfolge anzugeben und beispielsweise ohne die Möglichkeit auszuschließen, dass mehrere Arten von ersten Seiten und/oder mehrere Arten von zweiten Seiten oder jeweils genau eine Art vorgesehen sein kann. Weiterhin können zusätzliche Seiten, beispielsweise eine oder mehrere dritte Seiten vorhanden sein. Die erste Seite kann einer äußeren Umgebung des Stallfußbodenbelags zugewandt sein. Die zweite Seite kann der Platte zugewandt sein. Die zweiten Ablaufrinnen können auf der ersten Seite angeordnet sein. Die Leitung kann auf der zweiten Seite befestigbar sein. Insbesondere kann die Leitung mittig auf der zweiten Seite befestigbar sein.

Die zweiten Ablaufrinnen können jeweils ein erstes Ende und ein zweites Ende aufweisen. Die Begriffe "erstes Ende" und "zweites Ende" sind als reine Beschreibungen anzusehen, ohne eine Rangfolge oder Reihenfolge anzugeben und beispielsweise ohne die Möglichkeit auszuschließen, dass mehrere Arten von ersten Enden und/oder mehrere Arten von zweiten Enden oder jeweils genau eine Art vorgesehen sein kann. Weiterhin können zusätzliche Enden, beispielsweise eine oder mehrere dritte Enden vorhanden sein. Das zweite Ende kann in eine Außenseite des Abdeckelements münden. Insbesondere können die zweiten Ablaufrinnen jeweils ein Gefälle von dem ersten Ende zu dem zweiten Ende aufweisen. Insbesondere kann das erste Ende in einer Mitte des Abdeckelements münden. Das Gefälle kann eine Steigung von 0,1 % bis 8 %, vorzugsweise von 0,15% bis 5 % und besonders bevorzugt von 0,2 % bis 3 % aufweisen. Dadurch kann eine Separation von Kot und Harn erfolgen.

Wie bereits oben aufgeführt, sind die zweiten Ablaufrinnen des Abdeckelements in einem Winkel von 30° bis 90° zu der ersten Ablaufrinne der Platte angeordnet. Insbesondere kann der Winkel 40° bis 70 ° und besonders bevorzugt 45° betragen. Das Abdeckelement kann auf der Platte angeordnet sein und die zweiten Ablaufrinnen können in einer Ebene über einer Ebene der ersten Ablaufrinnen angeordnet sein. Dadurch kann der Harn schnell auf die Platte, insbesondere in die erste Ablaufrinne, abgeführt werden.

Der Stallfußbodenbelag kann weiterhin mindestens einen Drucksensor aufweisen. Unter einem "Drucksensor" kann im Rahmen der vorliegenden Erfindung grundsätzlich eine beliebige Vorrichtung verstanden werden, welche den Druck bestimmen kann und welche beispielsweise mindestens ein Messsignal entsprechend des Drucks erzeugen kann, beispielsweise ein elektrisches Messsignal wie beispielsweise eine Spannung oder einen Strom. Der Drucksensor kann auf der ersten Seite des Abdeckelements angeordnet sein. Alternativ kann der Drucksensor auf der Platte angeordnet sein. Insbesondere kann der Stallfußbodenbelag eine Vielzahl an Drucksensoren aufweisen. Der Drucksensor kann insbesondere an stark frequentierten Bereichen der Tiere auf dem Stallfußbodenbelag angeordnet sein. In diesem Bereich kann eine erhöhte Menge an hohen Urin- und Kotausscheidungen auftreten. Durch gezielte Applikation der Urease-Inhibitoren kann somit auf hohe Ammoniakemissionen reagiert werden.

Der Begriff "Leitung" bezeichnet grundsätzlich eine beliebige Verbindung zwischen mindestens zwei Elementen, welche für einen Transport eines fluiden Mediums eingerichtet ist. Die Leitung kann insbesondere ausgewählt sein aus der Gruppe bestehend aus: einem Schlauch, einem Rohr. Die Leitung kann in das Abdeckelement integrierbar sein. Erfindungsgemäß ist die Leitung auf der Platte angeordnet. Insbesondere kann die Platte mindestens eine Aussparung aufweisen. Die Aussparung kann eingerichtet sein, die Leitung aufzunehmen. Die Leitung kann entlang einer Erstreckungsrichtung der ersten Ablaufrinne angeordnet sein. Die Leitung kann parallel zu der ersten Ablaufrinne anordenbar sein. Weiterhin kann die Leitung quer, insbesondere senkrecht, zu den zweiten Ablaufrinnen angeordnet sein. Die Leitung kann insbesondere gerade ausgebildet sein. Die Leitung kann einen Innendurchmesser von 0,1 cm bis 5 cm, vorzugsweise von 0,2 cm bis 2 cm und besonders bevorzugt von 0,3 cm bis 1 cm aufweisen. Weiterhin kann die Leitung einen Außendurchmesser von 0,1 cm bis 5 cm, vorzugsweise von 0,2 cm bis 2 cm und besonders bevorzugt von 0,5 cm bis 1,2 cm aufweisen. Besonders bevorzugt kann der Innendurchmesser 0,5 cm betragen und der Außendurchmesser kann 0,7 cm betragen. Auch andere Dimensionen sind grundsätzlich denkbar.

Die Erhebung kann insbesondere eine Aussparung aufweisen. Die Aussparung kann sich entlang einer Erstreckungsrichtung der Leitung erstrecken. Bei der Aussparung kann es sich insbesondere um eine Bohrung handeln. Die Aussparung kann eingerichtet sein, die Leitung aufzunehmen. Die Platte kann insbesondere eine Vielzahl an Erhebungen aufweisen. Die Erhebungen können nebeneinander entlang der Erstreckungsrichtung der ersten Ablaufrinne angeordnet sein. Die Leitung kann teilweise in den Erhebungen aufgenommen sein.

Wie bereits oben ausgeführt, weist die Leitung eine Vielzahl von Öffnungen auf. Der Begriff "Öffnung" bezeichnet grundsätzlich einen beliebigen Bereich der Leitung, welcher für ein fluides Medium durchlässig ist. Insbesondere kann die Öffnung eingerichtet sein für einen Transport des fluiden Mediums von einem Inneren der Leitung zu einem Bereich außerhalb der Leitung. Die Öffnungen können insbesondere auf einer Mantelfläche der Leitung angeordnet sein. Insbesondere können die Öffnungen entlang einer Erstreckungsrichtung der Leitung angeordnet sein. Die Öffnungen können beispielsweise als Ventile ausgestaltet sein. Die Öffnungen der Leitung können porös ausgebildet sein. Die Leitung kann als selektiv permeabler Schlauch ausgebildet sein. Mittels einer Pumpe kann ein Druckaufbau erfolgen. Dadurch können Urease-Inhibitoren in eine äußere Umgebung des Schlauchs appliziert werden. Der Begriff "permeabel" bezeichnet grundsätzlich eine Durchlässigkeit eines beliebigen Elements für Gase und/oder Flüssigkeiten.

Urease-Inhibitoren sind Verbindungen, die die Aktivität des Enzyms Urease reduzieren oder ganz verhindern. Der mindestens eine Urease-Inhibitor kann einen einzelnen Urease-Inhibitor, aber auch Mischungen von zwei oder mehr Urease-Inhibitoren umfassen. Es gibt hinsichtlich der Art des/der Urease-Inhibitoren keine Beschränkungen, solange er/sie für den Einsatz im Stall geeignet ist/sind. Als Urease-Inhibitoren beispielhaft zu nennen sind Phosphorsäurediamide, Phosphazene und Thiole sowie Derivate der Hydroxamsäure und des Harnstoffs. Mögliche Urease-Inhibitoren sind beispielsweise Phenylphosphorsäurediamid (PPD), N-Butylthiophophorsäuretriamid (NBPT), N-Propylthiophophorsäuretriamid (NPPT), Monophenoxyphosphazen, β-Mercaptoethanol, Acetohydroxamsäure (AHA), Thioharnstoff und Hydroxyharnstoff.

Der Stallfußbodenbelag kann weiterhin mindestens einen Blasenschlauch aufweisen. Der Blasenschlauch kann mit der Flüssigkeit umfassend den mindestens einen Urease-Inhibitor befüllbar sein. Der Blasenschlauch kann eingerichtet sein, bei einer Druckbelastung die Flüssigkeit umfassend den mindestens einen Urease-Inhibitor in eine äußere Umgebung des Blasenschlauchs abzugeben. Der Blasenschlauch kann zwischen der Platte und dem Abdeckelement anordenbar sein. Der Blasenschlauch kann derart ausgestaltet sein, dass keine Verunreinigungen von der äußeren Umgebung des Blasenschlauchs in ein Inneres des Blasenschlauchs gelangen können. Der Blasenschlauch kann somit wartungsfrei sein. Es wird explizit betont, dass die Leitung zumindest teilweise als Blasenschlauch ausgebildet sein kann. Entsprechend kann der Blasenschlauch zumindest teilweise in den Erhebungen bzw. deren Aussparungen aufgenommen sein. Alternativ kann der Blasenschlauch zusätzlich zu der Leitung vorgesehen sein.

Der Begriff "Blasenschlauch" bezeichnet grundsätzlich einen Schlauch, der ausgebildet ist, eine Flüssigkeit zumindest temporär zu speichern und bei Druckbelastung auf seiner vollständigen Länge Fluidblasen ausströmen zu lassen. Der Blasenschlauch kann dabei derart ausgestaltet sein, dass die Fluidblasen bei Druckbelastung an vorbestimmten Stellen ausströmt, wie beispielsweise an den Stellen, an denen die Druckbelastung und somit Verformung des Blasenschlauchs auftritt. Grundsätzlich müssen die Schläuche eine Chemikalienbeständigkeit, weichmacherfreie Innenwände, Beständigkeit gegen Absorption und Adsorption wasserhaltiger Flüssigkeiten und keine Beeinträchtigungen durch chemische Desinfektions- und Reinigungsmittel aufweisen. Somit sind beispielsweise Polyvinylacetat-Schlauchausführungen, Silikon-Gummi-Schläuche, Urethanschläuche, Fluorpolymerschläuche und Kombinationen dieser Materialien für Schläuche als Blasenschlauch im Rahmen der vorliegenden Erfindung anwendbar.

Das Abdeckelement kann eingerichtet sein, sich durch eine erhöhte physikalische Druckbelastung über Klauen der Tiere zu verformen. Der Blasenschlauch kann eingerichtet sein, sich durch Verformen des Abdeckelements zu verformen und infolgedessen die Flüssigkeit umfassend den mindestens einen Urease-Inhibitor in die äußere Umgebung des Blasenschlauchs abzugeben.

In einem weiteren Aspekt der vorliegenden Erfindung wird ein System gemäß Anspruch 10 zur Reduktion mindestens eines Gases in einem Stall vorgeschlagen. Der Begriff "System" bezeichnet grundsätzlich eine Vorrichtung welche zwei oder mehr Komponenten umfasst. Die Komponenten können eingerichtet sein, miteinander wechselzuwirken, insbesondere für einen gemeinsamen Zweck. Das System umfasst den Stallfußbodenbelag wie er bereits beschrieben wurde oder im Folgenden noch beschrieben wird. Weiterhin umfasst das System mindestens einen Vorratsbehälter für die Flüssigkeit umfassenden Urease-Inhibitor. Weiterhin umfasst das System mindestens eine Pumpe. Die Pumpe ist eingerichtet, die Flüssigkeit umfassenden mindestens einen Urease-Inhibitor von dem Vorratsbehälter in die Leitung zu pumpen.

Der Begriff "Vorratsbehälter" bezeichnet grundsätzlich ein beliebiges Element, welches einen Hohlraum ausweist. In dem Hohlraum können Objekte und/oder Materialien, insbesondere fluide Medien, aufgenommen sein. Der Vorratsbehälter kann insbesondere eingerichtet sein, die Objekte und/oder die Materialien, für einen zeitlich aufgeschobenen Bedarf zu horten und bei Bedarf abzugeben.

Der Vorratsbehälter kann eingerichtet sein, mindestens 500 1, vorzugsweise mindestens 750 1 und besonders bevorzugt mindestens 100 1 an der Flüssigkeit umfassend den mindestens einen Urease-Inhibitor, zu speichern. Auch andere Dimensionen des Vorratsbehälters sind jedoch grundsätzlich denkbar.

Der Begriff "Pumpe" bezeichnet eine beliebige Vorrichtung zur Förderung von inkompressiblen Fluiden. Die Pumpe kann eingerichtet sein, eine Antriebsarbeit in Bewegungsenergie des inkompressiblen Fluids umzuwandeln. Die Pumpe kann eingerichtet sein, die Flüssigkeit umfassend den Urease-Inhibitor in die Leitung zu transportieren, insbesondere in zeitlichen Abständen.

Das System kann weiterhin mindestens einen Anmischbehälter umfassen. Der Begriff "Anmischbehälter" bezeichnet grundsätzlich ein beliebiges Element, welches einen Hohlraum ausweist. In dem Hohlraum können Materialien, insbesondere fluide Medien, aufgenommen sein. Der Anmischbehälter kann eingerichtet sein, die Materialien zu vermischen. Hierfür kann der Anmischbehälter mindestens eine Rührvorrichtung aufweisen. Weiterhin kann der Anmischbehälter mindestens ein Dosierelement zur Einstellung einer definierten Konzentration des Urease-Inhibitors und/oder für weitere Komponenten der Flüssigkeit umfassend den Urease-Inhibitor umfassen. Die definierte Konzentration kann entsprechend eines Bedarfs und/oder auf Basis definierter Ammoniakgrenzwerte in dem Stall für eine schnelle Reduzierung eines Ammoniakgehaltes in der Umgebungsluft erstellt werden. Der Vorratsbehälter kann den Anmischbehälter umfassen. Alternativ können der Vorratsbehälter und der Anmischbehälter als separate Behälter ausgebildet sein.

Das System kann weiterhin mindestens eine erste Steuereinheit und mindestens eine zweite Steuereinheit umfassen. Die erste Steuereinheit kann eingerichtet sein, eine Konzentration des mindestens einen Urease-Inhibitors in dem Anmischbehälter einzustellen. Der Begriff "Steuereinheit" bezeichnet grundsätzlich eine beliebige elektronische Vorrichtung, welche eingerichtet ist, einen definierten Vorgang zu steuern. Die Steuereinheit kann insbesondere eine Datenverarbeitungsvorrichtung umfassen, beispielsweise mindestens einen Computer oder Mikrocontroller. Die Datenverarbeitungsvorrichtung kann beispielsweise einen oder mehrere flüchtige und/oder nicht flüchtige Datenspeicher aufweisen. Die Steuereinheit, insbesondere die Datenverarbeitungsvorrichtung, kann beispielsweise programmtechnisch eingerichtet sein, um ein oder mehrere Komponenten des Systems anzusteuern. Die Steuereinheit kann beispielsweise weiterhin mindestens eine Schnittstelle umfassen, insbesondere eine elektronische Schnittstelle und/oder eine Mensch-Maschine-Schnittstelle wie beispielsweise eine Eingabe-/Ausgabe-Vorrichtung wie ein Display und/oder eine Tastatur. Die Steuereinheit kann beispielsweise zentral oder auch dezentral aufgebaut sein. Auch andere Ausgestaltungen sind denkbar.

Die Begriffe "erste Steuereinheit" und "zweite Steuereinheit" sind als reine Beschreibungen anzusehen, ohne eine Rangfolge oder Reihenfolge anzugeben und beispielsweise ohne die Möglichkeit auszuschließen, dass mehrere Arten von ersten Steuereinheiten und/oder mehrere Arten von zweiten Steuereinheiten oder jeweils genau eine Art vorgesehen sein können. Weiterhin können zusätzliche Steuereinheiten, beispielsweise eine oder mehrere dritte Steuereinheiten vorhanden sein.

Das System kann weiterhin mindestens einen Gasmesssensor, insbesondere einen Ammoniak-Sensor, umfassen. Der Gasmesssensor kann eingerichtet sein um eine Ammoniakemissionsbelastung in dem Stall, insbesondere in Bodennähe, zu erfassen. Der Gasmesssensor kann in einem Abstand von 0,30 m bis 2,5 m zu dem Stallfußbodenbelag angeordnet sein. Die zweite Steuereinheit kann eingerichtet sein, die Pumpe in Abhängigkeit eines Signals des Gasmesssensors zu steuern. Weiterhin kann die zweite Steuereinheit eingerichtet sein, auf Basis definierter Grenzwerte sowie emissionsbestimmender Faktoren, wie beispielsweise eine Temperatur oder eine Verdunstungsrate, die Flüssigkeit umfassend den Urease-Inhibitor in die erste Ablaufrinne zu applizieren. Die Steuerung und Kontrolle kann über eine App-Anwendung erfolgen.

Über Gasmesssensoren (Ammoniak) kann die aktive Ammoniakemissionsbelastung im Stall sowie in Bodennähe erfasst und auf Basis definierter Grenzwerte sowie emissionsbestimmender Faktoren (Temperatur, Verdunstungsrate etc.) die flüssigen Urease-Inhibitoren über den Stallfußboden in die Urinablaufrinnen appliziert werden. Die Steuerung und Kontrolle kann über App-Anwendung erfolgen.

Wie oben bereits ausgeführt, kann der Stallfußbodenbelag weiterhin den mindestens einen Drucksensor aufweisen. Die zweite Steuereinheit kann weiterhin eingerichtet sein, die Pumpe in Abhängigkeit eines Signals des Drucksensors zu steuern.

In einem weiteren Aspekt der vorliegenden Erfindung wird ein Verfahren gemäß Anspruch 14 zur Reduktion mindestens eines Gases in einem Stall vorgeschlagen.

Das Verfahren umfasst die dargestellten Schritte, bevorzugt in der angegebenen Reihenfolge. Auch eine andere Reihenfolge ist grundsätzlich möglich. Weiterhin können einer oder mehrere oder alle der Verfahrensschritte auch wiederholt durchgeführt werden. Weiterhin können zwei oder mehrere der Verfahrensschritte auch ganz oder teilweise zeitlich überlappend oder gleichzeitig durchgeführt werden. Das Verfahren kann, zusätzlich zu den genannten Verfahrensschritten auch weitere Verfahrensschritte umfassen.

Das Verfahren umfasst die folgenden Schritte:
a) Bereitstellen eines Systems wie es bereits beschrieben wurde oder im Folgenden noch beschrieben wird;
b) Pumpen der Flüssigkeit umfassend den mindestens einen Urease-Inhibitor von dem Vorratsbehälter in die Leitung;
c) Abgeben der Flüssigkeit umfassend den mindestens einen Urease-Inhibitor in eine äußere Umgebung der Leitung.

Die vorgeschlagene Vorrichtung und das vorgeschlagene Verfahren weisen gegenüber bekannten Vorrichtungen und Verfahren zahlreiche Vorteile auf. Es wird ein emissionsarmer, planbefestigbarer Stallfußboden umfassend Leitungen für eine Applikation von flüssigen Urease-Inhibitoren, insbesondere mittels eines regelbaren Emissionsmodels auf Basis einer detektierten Ammoniakemission, beschrieben. Der Stallfußenbodenbelag zeichnet sich grundsätzlich durch eine Verbesserung des Tierwohls sowie eine nachhaltige steuerbare und reduzierte Ammoniakemission aus.

Mess- und Regelungssysteme können grundsätzlich mittels einfacher App-Anwendung für eine Senkung der Ammoniakemissionen im bodennahen Bereich des Stallfußbodens angewendet werden, welche zu einer Optimierung einer Tiergesundheit und eines Tierwohls führen können. Parallel dazu kann ein Landwirt den Verpflichtungen zur Reduktion der Emissionen der NERC-Richtlinie gerecht werden und einen zusätzlichen Beitrag für eine nachhaltige, dem Tierwohl entsprechende Lebensmittelproduktion, leisten.

Der Stallfußbodenbelag kann besonders für alte renovierungsbedürftige planbefestigte Stallböden geeignet sein. Parallel dazu kann aufgrund der modularen Verlegung des Stallfußbodenbelags eine schnelle Stallsanierung und eine Integration der Urease-Inhibitoren über Schlauchleitungen sowie einfache Pumpentechnik inklusive Aufbewahrungsbehälter mit entsprechenden Ausführungen wie Vorratstank, Anmischbehälter mit Rührtechnik, Dosiereinheit, für ein Urease-Inhibitor erfolgen.

Der Stallfußbodenbelag kann einen verbesserten Laufkomfort, insbesondere durch eine Stabilität sowie durch eine Sauberkeit von Oberflächenstrukturen, in Kombination mit einer reduzierten Ammoniakemissionsbelastung aufweisen, welche das Tierwohl erhöhen können und sich günstig auf eine Milchproduktion sowie eine Lebensdauer von Milchkühen auswirken.

Der Stallfußbodenbelag kann durch geeignete Förderelemente mit entsprechenden Profilaufsetzen, die durch die Abflussrinnen verlaufen, gereinigt werden. Gülle mit einem hohen Feststoffanteil, die auf dem Abdeckelement liegen bleibt, kann ebenfalls durch die hohe Reinigungsleistung der Förderelemente aufgenommen werden. Weiterhin kann der Urin mittels eines leichten Gefälles selbsttätig ablaufen.

Das Abdeckelement kann aus einem Elastomer hergestellt sein und die Platte umfassend die Erhebungen können beispielsweise aus einem Kompositmaterial hergestellt sein. Eine Kombination von harten und weichen Elementen kann einer idealen Lauffläche für Rinder entsprechen. Durch die harten Oberflächenrasterstrukturen der Erhebungen kann ein Abrieb erfolgen. Das elastomere Material kann zu einer Entlastung von Klauen führen. Der Urin kann durch die zweiten Ablaufrinnen schnell in die erste Ablaufrinne ablaufen und wird dann dort bereits mit den durch Leitungen austretenden Urease-Inhibitoren vermischt, wodurch eine Ammoniakbildung sofort auf ein Mindestmaß reduziert werden kann.

Der Stallfußbodenbelag kann dahingehend verbessert werden, dass der Stallfußbodenbelag eine wirksame Reinigung der zweiten Ablaufrinnen bei niedrigen Betriebskosten und einer geringen Ammoniakbelastung durch aktive bzw. passive Oberflächengestaltungen des Stallfußbodenbelags mit einer Steuerungs- und Regelungstechnik in der Stall- und Umgebungsluft ermöglicht. Die gesamten und/oder Punktammoniakbelastungen in dem Stall, insbesondere in Bodennähe, können über ein interaktives Regelungs- und Steuerungsschema mittels verbauter Gasmesssensoren in sensiblen Bereichen des Stalls (Futtertisch, Bodennähe, Laufgänge, Liegeflächen etc.) erfasst werden.

### ABBILDUNGEN

Fig. 1: Schematische Darstellung eines erfindungsgemäßen Stallfußbodenbelags;
Fig. 2: Schematische Darstellung eines erfindungsgemäßen Systems.

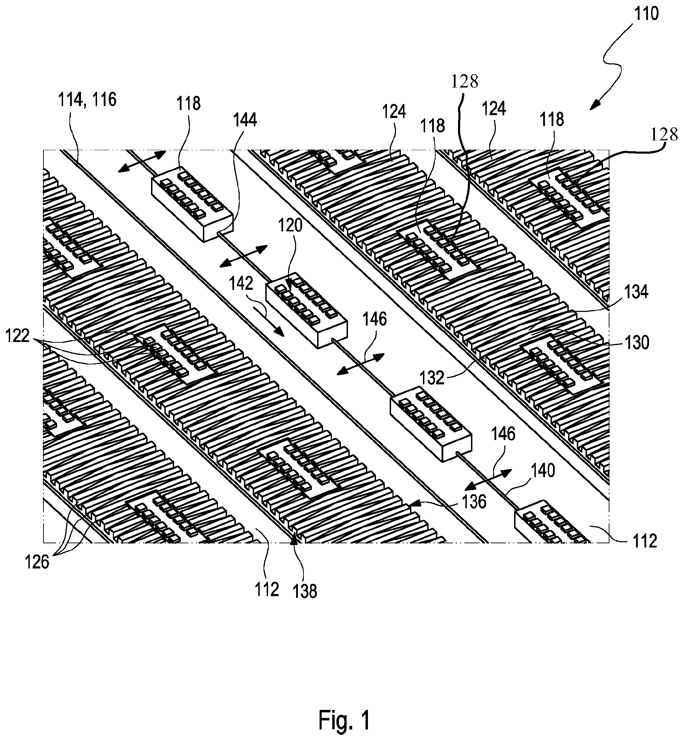

Figur 1 zeigt eine schematische Darstellung eines erfindungsgemäßen Stallfußbodenbelags 110.

Der Stallfußbodenbelag 110 umfasst mindestens eine Platte 112. Insbesondere kann der Stallfußbodenbelag 110 eine Vielzahl an Platten 112 aufweisen. Die Vielzahl an Platten 112 können nebeneinander angeordnet sein. Die Platte 112 weißt mindestens eine erste Ablaufrinne 114 auf. Die erste Ablaufrinne 114 kann insbesondere als linienförmige Vertiefung 116 in der Platte 112 ausgebildet sein. Weiterhin kann die erste Ablaufrinne 114 gerade ausgebildet sein. Die Platte 112 kann mindestens eine Erhebung 118 aufweisen. Die Erhebung 118 kann mindestens eine strukturierte Oberfläche 120 aufweisen. Die strukturierte Oberfläche 120 kann insbesondere eine Vielzahl an voneinander beabstandeten quaderförmigen Erhebungen 122 aufweisen.

Der Stallfußbodenbelag 110 umfasst weiterhin mindestens ein Abdeckelement 124. Das Abdeckelement 124 ist auf die Platte 112 auflegbar. Das Abdeckelement 124 weist eine Vielzahl von zweiten Ablaufrinnen 126 auf. Die zweiten Ablaufrinnen 126 sind in einem Winkel von 30° bis 90° zu der ersten Ablaufrinne 114 angeordnet. Die zweiten Ablaufrinnen 126 können jeweils ein erstes Ende 130 und ein zweites Ende 132 aufweisen. Insbesondere kann das erste Ende 130 in einer Mitte 134 des Abdeckelements 124 münden. Insbesondere können die zweiten Ablaufrinnen 126 jeweils ein Gefälle von dem ersten Ende 130 zu dem zweiten Ende 132 aufweisen. Die zweiten Ablaufrinnen 126 des Abdeckelements 124 sind in einem Winkel von 30° bis 90° zu der ersten Ablaufrinne114 der Platte 112 angeordnet.

Das Abdeckelement 124 kann weiterhin mindestens eine Aussparung 128 aufweisen. Das Abdeckelement 124 kann derart auf der Platte 112 auflegbar sein, dass die Erhebung 118 in der Aussparung 128 aufgenommen ist.

Das Abdeckelement 124 kann eine erste Seite 136 und eine gegenüberliegende zweite Seite 138 aufweisen. Die erste Seite kann einer äußeren Umgebung des Stallfußbodenbelags 110 zugewandt sein. Die zweite Seite 136 kann der Platte 112 zugewandt sein. Die zweiten Ablaufrinnen 126 können auf der ersten Seite 136 angeordnet sein.

Erfindungsgemäß umfasst der Stallfußbodenbelag 110 mindestens eine Leitung 140. Die Leitung 140 ist auf der Platte 112 angeordnet. Die Leitung 140 kann entlang einer Erstreckungsrichtung 142 der ersten Ablaufrinne 114 angeordnet sein. Die Leitung 140 kann parallel zu der ersten Ablaufrinne 114 anordenbar sein. Weiterhin kann die Leitung 140 senkrecht zu den zweiten Ablaufrinnen 126 angeordnet sein. Die Erhebung 118 kann insbesondere eine Aussparung 144 aufweisen. Die Aussparung 144 kann eingerichtet sein, die Leitung 140 aufzunehmen. Die Platte 112 kann insbesondere eine Vielzahl an Erhebungen 118 aufweisen. Die Erhebungen 118 können nebeneinander entlang der Erstreckungsrichtung 142 der ersten Ablaufrinne 114 angeordnet sein. Die Leitung 140 kann teilweise in den Erhebungen 118, insbesondere in den Aussparungen 144, aufgenommen sein. Die Leitung 140 kann eingerichtet sein, eine Flüssigkeit umfassend mindestens einen Urease-Inhibitor abzugeben. Dies ist schematisch mit Pfeil 146 dargestellt. Die Leitung 140 kann zumindest teilweise als Blasenschlauch ausgebildet sein. Alternativ kann zusätzlich zu der Leitung 140 mindestens ein Blasenschlauch zwischen der Platte 112 und dem Abdeckelement 124 angeordnet sein.

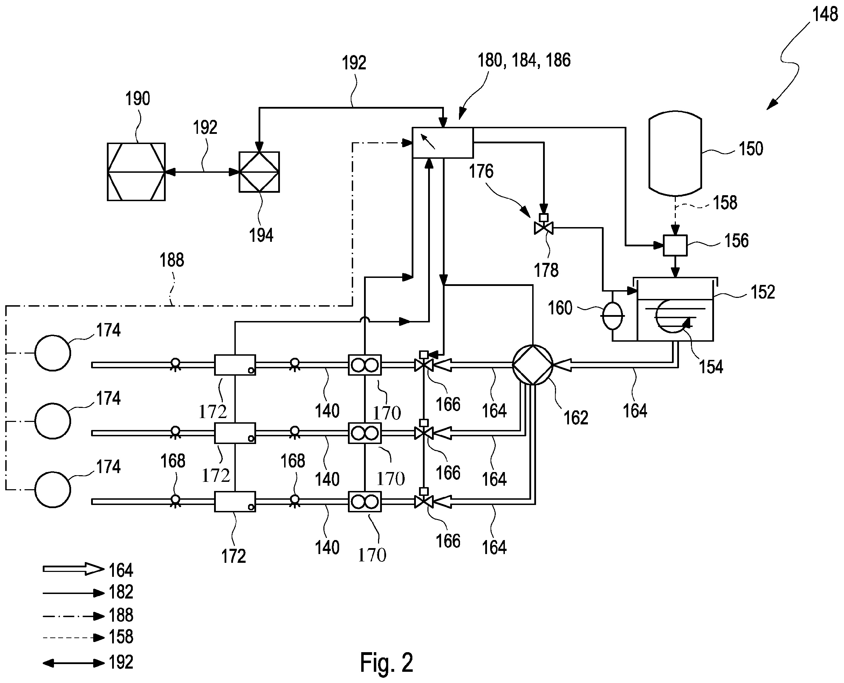

Figur 2 zeigt eine schematische Darstellung eines erfindungsgemäßen Systems 148. Das System 148 umfasst einen Stallfußbodenbelag 110. Der Stallfußbodenbelag 110 kann zumindest weitgehend dem Stallfußbodenbelag 110 gemäß Figur 1 entsprechen. Es kann daher auf die Beschreibung der Figur 1 oben verwiesen werden.

Weiterhin umfasst das System 148 mindestens einen Vorratsbehälter 150 für den Urease-Inhibitor. Der Urease-Inhibitor kann in dem Vorratsbehälter 150 als Feststoff bereitgestellt werden. Das System 148 kann weiterhin mindestens einen Anmischbehälter 152 umfassen. Der Anmischbehälter 152 kann mindestens eine Rührvorrichtung aufweisen, wie schematisch mit Pfeil 154 dargestellt. Weiterhin kann der Anmischbehälter 152 mindestens ein Dosierelement 156 zur Einstellung einer definierten Konzentration des Urease-Inhibitors und/oder für weitere Komponenten der Flüssigkeit umfassend den Urease-Inhibitor umfassen. Eine Zuleitung des Urease-Inhibitors von dem Vorratsbehälter 150 zu dem Anmischbehälter 152 über das Dosierelement 156 ist in Figur 2 schematisch mit Pfeil 158 darstellt. Der Anmischbehälter 152 kann weiterhin eine Wasserzuleitung 176 umfassen, welche mittels eines Ventils 178 mit dem Anmischbehälter 152 verbunden ist. Der Anmischbehälter 152 kann weiterhin einen Füllstandssensor 160 aufweisen.

Weiterhin umfasst das System 148 mindestens eine Pumpe 162. Die Pumpe 162 kann mittels einer Leitung mit dem Anmischbehälter 152 verbunden sein. Dies ist schematisch mit Pfeil 164 dargestellt. Die Pumpe 162 ist eingerichtet, die Flüssigkeit umfassenden mindestens einen Urease-Inhibitor von dem Anmischbehälter 152 in die Leitung 140 zu pumpen. Zwischen der Leitung 140 und der Pumpe 162 kann ein Ventil 166 geschaltet sein. Die Leitung 140 weist mindestens eine Öffnung 168 auf welche für die Flüssigkeit umfassend den Urease-Inhibitor permeable ausgebildet ist. Weiterhin kann die Leitung 140 ein oder mehrere Durchflussmesser 170 aufweisen. Der Stallfußbodenbelag 110 kann Drucksensoren 172 aufweisen. Der Drucksensor 172 kann eingerichtet sein, bei Druckeinwirkung durch ein Tier, ein Signal an eine Steuereinheit abzugeben.

Das System kann weiterhin mindestens einen Gasmesssensor 174 umfassen. Der Gasmesssensor 174 kann eingerichtet sein eine Ammoniakemissionsbelastung in dem Stall, insbesondere in Bodennähe, erfassen.

Das System 148 kann weiterhin mindestens eine erste Steuereinheit 180 umfassen. Die erste Steuereinheit 180 kann eingerichtet sein, eine Konzentration des mindestens einen Urease-Inhibitors in dem Anmischbehälter 152 einzustellen. Hierfür kann mindestens eine Leitung von der ersten Steuereinheit 180 zu der Wasserzuleitung 176 und zu dem Dosierelement 156 eingerichtet sein. Die Leitung ist schematisch mit Pfeil 182 dargestellt.

Weiterhin kann das System 148 mindestens eine zweite Steuereinheit 184 umfassen. Die erste Steuereinheit 180 und die zweite Steuereinheit 184 können als gemeinsame Steuereinheit 186 ausgebildet sein. Die zweite Steuereinheit 184 kann eingerichtet sein, die Pumpe 162 in Abhängigkeit eines Signals des Gasmesssensors 174 zu steuern. In Figur 2 sind Gasmesssensorikleitungen schematisch mit Pfeil 188 dargestellt. Weiterhin sind Leitungen von der zweiten Steuereinheit 184 zu der Pumpe 162 und zu dem Ventil 166 schematisch mit Pfeil 182 dargestellt.

Die Steuerung und Kontrolle kann über eine App-Anwendung erfolgen. In Figur 2 sind elektrische Leitungen zwischen einem Computer, einem Smartphone oder einem Tablet 190 und der Steuereinheit 186 mittels einer speicherprogrammierbaren Steuerung 194 schematisch mit Pfeil 192 dargestellt.

### Bezugszeichenliste

- 110: Stallfußbodenbelag
- 112: Platte
- 114: erste Ablaufrinne
- 116: Vertiefung
- 118: Erhebung
- 120: strukturierte Oberfläche
- 122: quaderförmige Erhebung
- 124: Abdeckelement
- 126: zweite Ablaufrinne
- 128: Aussparung
- 130: erstes Ende
- 132: zweites Ende
- 134: Mitte
- 136: erste Seite
- 138: zweite Seite
- 140: Leitung
- 142: Erstreckungsrichtung
- 144: Aussparung
- 146: Pfeil
- 148: System
- 150: Vorratsbehälter
- 152: Anmischbehälter
- 154: Pfeil
- 156: Dosierelement
- 158: Pfeil
- 160: Füllstandssensor
- 162: Pumpe
- 164: Pfeil
- 166: Ventil
- 168: Öffnung
- 170: Durchflussmesser
- 172: Drucksensor
- 174: Gasmesssensor
- 176: Wasserzuleitung
- 178: Ventil
- 180: erste Steuereinheit
- 182: Leitung
- 184: zweite Steuereinheit
- 186: Steuereinheit
- 188: Pfeil
- 190: Computer, Smartphone, Tablet
- 192: Pfeil
- 194: Speicherprogrammierbare Steuerung

## Patentansprüche

1. Stallfußbodenbelag (110), wobei der Stallfußbodenbelag (110) umfasst:
- mindestens eine Platte (112), wobei die Platte (112) mindestens eine erste Ablaufrinne (114) aufweist;
- mindestens ein Abdeckelement (124), wobei das Abdeckelement (124) auf die Platte (112) auflegbar ist, wobei das Abdeckelement (124) eine Vielzahl von zweiten Ablaufrinnen (126) aufweist, wobei die zweiten Ablaufrinnen (126) in einem Winkel von 30° bis 90° zu der ersten Ablaufrinne (114) angeordnet sind; **dadurch gekennzeichnet, dass** der Stallfußbodenbelag (110) umfasst:
- mindestens eine Leitung (140), wobei die Leitung (140) eine Vielzahl von Öffnungen (168) aufweist, welche für eine Flüssigkeit umfassend mindestens einen Urease-Inhibitor permeabel ausgebildet sind, wobei die Leitung (140) auf der Platte (112) angeordnet ist.

2. Stallfußbodenbelag (110) nach dem vorhergehenden Anspruch, wobei die Leitung (140) parallel zu der ersten Ablaufrinne (124) anordenbar ist.

3. Stallfußbodenbelag (110) nach einem der vorhergehenden Ansprüche, wobei das Abdeckelement (124) eine erste Seite (136) und eine gegenüberliegende zweite Seite (138) aufweist, wobei die zweiten Ablaufrinnen (126) auf der ersten Seite (136) angeordnet sind, wobei die Leitung (140) auf der zweiten Seite (138) befestigbar ist.

4. Stallfußbodenbelag (110) nach einem der vorhergehenden Ansprüche, wobei die Öffnungen (168) der Leitung (140) porös ausgebildet sind.

5. Stallfußbodenbelag (110) nach einem der vorhergehenden Ansprüche, wobei die Öffnungen (168) entlang einer Erstreckungsrichtung (142) der Leitung (140) angeordnet sind.

6. Stallfußbodenbelag (110) nach einem der vorhergehenden Ansprüche, wobei die Platte (112) mindestens eine Erhebung (118) aufweist, wobei die Leitung (140) zumindest teilweise in der Erhebung (140) aufgenommen ist.

7. Stallfußbodenbelag (110) nach dem vorhergehenden Anspruch, wobei die Erhebung (118) mindestens eine Aussparung (144) aufweist, wobei die Leitung (140) zumindest teilweise in der Aussparung (144) der Erhebung (118) aufgenommen ist.

8. Stallfußbodenbelag (110) nach einem der beiden vorhergehenden Ansprüche, wobei das Abdeckelement (124) weiterhin mindestens eine Aussparung (128) aufweist, wobei das Abdeckelement (124) derart auf der Platte (112) auflegbar ist, dass die Erhebung (118) in der Aussparung (128) aufgenommen ist.

9. Stallfußbodenbelag (110) nach einem der vorhergehenden Ansprüche, wobei die Leitung (140) ein oder mehrere Durchflussmesser (170) aufweist.

10. System (148) zur Reduktion mindestens eines Gases in einem Stall, wobei das System (148) den Stallfußbodenbelag (110) nach einem der vorhergehenden Ansprüche umfasst, wobei das System (148) weiterhin mindestens einen Vorratsbehälter (150) für die Flüssigkeit umfassend den Urease-Inhibitor umfasst, wobei das System (148) weiterhin mindestens eine Pumpe (162) umfasst, wobei die Pumpe (162) eingerichtet ist, die Flüssigkeit umfassend den mindestens einen Urease-Inhibitor von dem Vorratsbehälter (150) in die Leitung (140) zu pumpen.

11. System (148) nach dem vorhergehenden Anspruch, wobei das System (148) weiterhin mindestens einen Anmischbehälter (152) umfasst, wobei das System (148) weiterhin mindestens eine erste Steuereinheit (180) umfasst, wobei die erste Steuereinheit (180) eingerichtet ist, eine Konzentration des mindestens einen Urease-Inhibitors in dem Anmischbehälter (152) einzustellen.

12. System (148) nach einem der beiden vorhergehenden Ansprüche, wobei das System (148) weiterhin mindestens einen Gasmesssensor (174) umfasst, wobei das System (148) weiterhin mindestens eine zweite Steuereinheit (184) umfasst, wobei die zweite Steuereinheit (184) eingerichtet ist, die Pumpe (162) in Abhängigkeit eines Signals des Gasmesssensors (174) zu steuern.

13. System (148) nach dem vorhergehenden Anspruch, wobei der Stallfußbodenbelag (110) weiterhin mindestens einen Drucksensor (172) aufweist, wobei die zweite Steuereinheit (184) weiterhin eingerichtet ist, die Pumpe (162) in Abhängigkeit eines Signals des Drucksensors (172) zu steuern.

14. Verfahren zur Reduktion mindestens eines Gases in einem Stall, wobei das Verfahren die folgenden Schritte umfasst:
a) Bereitstellen eines Systems (148) nach einem der vorhergehenden Ansprüche 10-13;
b) Pumpen der Flüssigkeit umfassend den mindestens einen Urease-Inhibitor von dem Vorratsbehälter (150) in die Leitung (140);
c) Abgeben der Flüssigkeit umfassend den mindestens einen Urease-Inhibitor in eine äußere Umgebung der Leitung (140).

## Claims

1. Barn floor covering (110), the barn floor covering (110) comprising:
- at least one panel (112), the panel (112) having at least one first drainage channel (114);
- at least one cover element (124), the cover element (124) being placeable onto the panel (112), the cover element (124) having a multiplicity of second drainage channels (126), the second drainage channels (126) being arranged at an angle of 30° to 90° to the first drainage channel (114), **characterized in that** the barn floor covering (110) comprises:
- at least one conduit (140), the conduit (140) having a multiplicity of openings (168), which are permeable for a liquid comprising at least one urease inhibitor, the conduit (140) being arranged on the panel (112).

2. Barn floor covering (110) according to the preceding claim, wherein the conduit (140) can be arranged parallel to the first drainage channel (124).

3. Barn floor covering (110) according to either of the preceding claims, wherein the cover element (124) has a first side (136) and an opposite second side (138), wherein the second drainage channels (126) are arranged on the first side (136), wherein the conduit (140) is fastenable on the second side (138).

4. Barn floor covering (110) according to any one of the preceding claims, wherein the openings (168) of the conduit (140) are porous.

5. Barn floor covering (110) according to any one of the preceding claims, wherein the openings (168) are arranged along a direction of extent (142) of the conduit (140).

6. Barn floor covering (110) according to any one of the preceding claims, wherein the panel (112) has at least one elevation (118), wherein the conduit (140) is at least partially accommodated in the elevation (140).

7. Barn floor covering (110) according to the preceding claim, wherein the elevation (118) has at least one cutout (144), wherein the conduit (140) is at least partially accommodated in the cutout (144) of the elevation (118).

8. Barn floor covering (110) according to either of the two preceding claims, wherein the cover element (124) furthermore has at least one cutout (128), the cover element (124) being placeable on the panel (112) in such a way that the elevation (118) is accommodated in the cutout (128).

9. Barn floor covering (110) according to any one of the preceding claims, wherein the conduit (140) has one or more flow meters (170).

10. System (148) for reducing at least one gas in a barn, the system (148) comprising the barn floor covering (110) according to any one of the preceding claims, the system (148) furthermore comprising at least one storage container (150) for the liquid comprising the urease inhibitor, the system (148) furthermore comprising at least one pump (162), the pump (162) being designed to pump the liquid comprising the at least one urease inhibitor from the storage container (150) into the conduit (140).

11. System (148) according to the preceding claim, the system (148) furthermore comprising at least one mixing container (152), the system (148) furthermore comprising at least one first control unit (180), the first control unit (180) being designed to adjust a concentration of the at least one urease inhibitor in the mixing container (152) .

12. System (148) according to either of the two preceding claims, the system (148) furthermore comprising at least one gas measuring sensor (174), the system (148) furthermore comprising at least one second control unit (184), the second control unit (184) being designed to control the pump (162) depending on a signal of the gas measuring sensor (174).

13. System (148) according to the preceding claim, wherein the barn floor covering (110) furthermore comprises at least one pressure sensor (172), wherein the second control unit (184) is furthermore designed to control the pump (162) depending on a signal of the pressure sensor (172).

14. Method for reducing at least one gas in a barn, the method comprising the following steps:
a) providing a system (148) according to any one of the preceding Claims 10-13;
b) pumping the liquid comprising the at least one urease inhibitor from the storage container (150) into the conduit (140);
c) dispensing the liquid comprising the at least one urease inhibitor into an external environment of the conduit (140).

## Revendications

1. Revêtement de sol d'étable (110), le revêtement de sol d'étable (110) comprenant :
- au moins une plaque (112), la plaque (112) comportant au moins une première rigole d'évacuation (114) ;
- au moins un élément de recouvrement (124), l'élément de recouvrement (124) pouvant être placé sur la plaque (112), l'élément de recouvrement (124) comportant une pluralité de deuxièmes rigoles d'évacuation (126), les deuxièmes rigoles d'évacuation (126) étant disposées selon un angle de 30° à 90° par rapport à la première rigole d'évacuation (114) ; **caractérisé en ce que** le revêtement de sol d'étable (110) comprend :
- au moins une conduite (140), la conduite (140) comportant une pluralité d'ouvertures (168), lesquelles sont réalisées de manière perméable à un liquide comprenant au moins un inhibiteur d'uréase, la conduite (140) étant disposée sur la plaque (112).

2. Revêtement de sol d'étable (110) selon la revendication précédente, la conduite (140) pouvant être disposée parallèlement à la première rigole d'évacuation (124).

3. Revêtement de sol d'étable (110) selon l'une des revendications précédentes, l'élément de recouvrement (124) comportant un premier côté (136) et un second côté (138) opposé, les deuxièmes rigoles d'évacuation (126) étant disposées sur le premier côté (136), la conduite (140) pouvant être fixée sur le second côté (138).

4. Revêtement de sol d'étable (110) selon l'une des revendications précédentes, les ouvertures (168) de la conduite (140) étant réalisées de manière poreuse.

5. Revêtement de sol d'étable (110) selon l'une des revendications précédentes, les ouvertures (168) étant disposées le long d'une direction d'extension (142) de la conduite (140).

6. Revêtement de sol d'étable (110) selon l'une des revendications précédentes, la plaque (112) comportant au moins une partie surélevée (118), la conduite (140) étant logée au moins en partie dans la partie surélevée (140).

7. Revêtement de sol d'étable (110) selon la revendication précédente, la partie surélevée (118) comportant au moins un évidement (144), la conduite (140) étant logée au moins en partie dans l'évidement (144) de la partie surélevée (118).

8. Revêtement de sol d'étable (110) selon l'une des deux revendications précédentes, l'élément de recouvrement (124) comportant par ailleurs au moins un évidement (128), l'élément de recouvrement (124) pouvant être placé de telle manière sur la plaque (112) que la partie surélevée (118) est logée dans l'évidement (128).

9. Revêtement de sol d'étable (110) selon l'une des revendications précédentes, la conduite (140) comportant un ou plusieurs débitmètres (170).

10. Système (148) de réduction d'au moins un gaz dans une étable, le système (148) comprenant le revêtement de sol d'étable (110) selon l'une des revendications précédentes, le système (148) comprenant par ailleurs au moins un réservoir (150) pour le liquide comprenant l'inhibiteur d'uréase, le système (148) comprenant par ailleurs au moins une pompe (162), la pompe (162) étant mise au point pour pomper le liquide comprenant l'au moins un inhibiteur d'uréase du réservoir (150) dans la conduite (140).

11. Système (148) selon la revendication précédente, le système (148) comprenant par ailleurs au moins un contenant de mélange (152), le système (148) comprenant par ailleurs au moins une première unité de commande (180), la première unité de commande (180) étant mise au point pour régler une concentration de l'au moins un inhibiteur d'uréase dans le contenant de mélange (152).

12. Système (148) selon l'une des deux revendications précédentes, le système (148) comprenant par ailleurs au moins un capteur de mesure de gaz (174), le système (148) comprenant par ailleurs au moins une deuxième unité de commande (184), la deuxième unité de commande (184) étant mise au point pour commander la pompe (162) en fonction d'un signal du capteur de mesure de gaz (174).

13. Système (148) selon la revendication précédente, le revêtement de sol d'étable (110) comportant par ailleurs au moins un capteur de pression (172), la deuxième unité de commande (184) étant mise au point par ailleurs pour commander la pompe (162) en fonction d'un signal du capteur de pression (172).

14. Procédé de réduction d'au moins un gaz dans une étable, le procédé comprenant les étapes suivantes :
a) fourniture d'un système (148) selon l'une des revendications précédentes 10 - 13 ;
b) pompage du liquide comprenant l'au moins un inhibiteur d'uréase du réservoir (150) dans la conduite (140) ;
c) distribution du liquide comprenant l'au moins un inhibiteur d'uréase dans un environnement extérieur de la conduite (140).
